# EUROPEAN PATENT SPECIFICATION

(11) **EP 3 751 687 B1**
(45) Date of publication and mention of the grant of the patent: **26.02.2025**
(21) Application number: 19382491.9
(22) Date of filing: 13.06.2019
(51) Int. Cl.: H02G 3/08, H02G 3/14, H02G 3/18

(54) **FLOOR-MOUNTED ELECTRICAL BOX**
BODENMONTIERTER SCHALTKASTEN
BOÎTIER ÉLECTRIQUE MONTÉ AU SOL

(43) Date of publication of application: 16.12.2020
(73) Proprietor: Schneider Electric España, S.A., 08019 Barcelona (ES)
(72) Inventor: BELZUNCE GALBARRA, ALFONSO, 31100 PUENTE LA REINA (NAVARRA) (ES); REBOLÉ OLLETA, JOSÉ ANTONIO, 31100 PUENTE LA REINA (NAVARRA) (ES); DENISE TRONCIN, MAEVA MICHÈLE, 31100 PUENTE LA REINA (NAVARRA) (ES); GONZÁLEZ IRIBAS, AITOR, 31100 PUENTE LA REINA (NAVARRA) (ES)
(74) Representative: Plasseraud IP

(56) References cited:
- EP-A1- 2 953 222
- US-A1- 2012 222 880
- US-A1- 2018 013 230
- US-B2- 7 126 059
- LEGRAND: "CATALOGUE PAGES INSIDE OUR NEW A truly universal range", 1 April 2019 (2019-04-01), XP055645806, Retrieved from the Internet <URL:https://www.legrand.se/sites/se/files/2019-08/Legrand_Floorboxes_0719.pdf> [retrieved on 20191122]
- OBO BETTERMANN GROUP: "Mounting of Floor boxes in polished screeds - OBO Bettermann", 31 January 2017 (2017-01-31), XP055942898, Retrieved from the Internet <URL:https://www.youtube.com/watch?v=AfcPUP1L8oM> [retrieved on 20220714]

## Description

### Technical field

The present invention relates to the industry dedicated to floor-mounted electrical boxes comprising at least one support for housing one or several electrical and/or data elements.

### State of the art

The need to arrange electrical and/or data elements in the floor is widely known today for the purpose of, for example, being arranged on large surfaces in which the distances to a wall in which the electrical and/or data elements can be arranged are excessive, or on surfaces with various pieces of furniture and the like which hinder or prevent arranging devices connected to the electrical and/or data elements located in nearby walls, for example.

For the purpose of personal safety and protecting the electrical and/or data elements, said elements are arranged individually or in groups in electrical boxes to be arranged in the floor such that they are accessible. These electrical boxes include a movable cover such that it opens and closes an access to the electrical and/or data elements arranged in the boxes.

Since the mentioned covers are arranged as part of the floor, they are subjected to numerous stresses as a consequence of being stepped on, acting as furniture support, being kicked, etc.

Accordingly, structural or material reinforcement of the covers or the attachments of the covers for opposing the mentioned stresses such that the service life of the electrical boxes is prolonged is known.

In view of the described drawback or limitation of the solutions existing today, a solution which allows prolonging the service life of the electrical boxes, and particularly that of the covers arranged therein is necessary.

Examples of prior art can be found for instance in Legrand Catalogue ("Our New Floor Boxes - A truly universal range", 1 April 2019); US 2012/222880 A1 describing a water-resistant electrical box; US 2018/013230 A1 disclosing a drainage structure for electrical connection box; or in EP 2953222 A1 describing a device holder for electrical installation devices and a method for producing a device holder. An example of mountable floor box in polished screeds can be found on "https://www.youtube.com/watch?v=AfcPUP1L8oM".

### Object of the invention

For the purpose of meeting this objective and solving the technical problems discussed up until now, in addition to providing additional advantages that may be derived below, the present invention provides a floor-mounted electrical box according to claim 1.

Preferably, the electrical box may comprise at least one perforation in at least one of the side walls, the perforation being arranged such that it determines a passage for draining off liquid externally with respect to the hollow space.

Preferably, the body may comprise a recess and the cover comprises a fin, such that in the closed position the fin is coupled and in contact with respect to the body in correspondence with the recess. A leak-tight attachment, or barrier for stopping a liquid filtrate, can thereby be provided between the cover and the body, and more specifically between the fin and the recess next to the corresponding part of a side of the access opening.

The cover may comprise a handle, the handle being defined as a hollowed-out notch on the outer face. Additionally or alternatively, the cover may comprise at least one tab, the tab being coupleable on the cover in a removable manner for partially covering the access to the hollow space by means of a movement from the inner face to the outer face.

Preferably, the tab may be at least partially elastically deformable such that, with the tab coupled on the cover partially covering the access to the hollow space, it is deformable establishing a passage into the hollow space.

The floor-mounted electrical box may preferably comprise fixing means for fixing the at least one support arranged in a fitted manner in the at least one fitting area.

The fixing means may preferably comprise a stop element in the at least one support, the stop element being movable between a free position, in which the at least one support can be fitted and taken out with respect to the at least one fitting area, and a blocking position, in which the at least one support can be blocked against being taken out with respect to the at least one fitting area.

The stop element may comprise a prominence for determining the free and blocking position.

In the free position the stop element may be placed against the at least one support, and in the blocking position the stop element is partially projecting from a border for locating same. Specifically, in the blocking position the prominence is at least partially projecting from the border for locating the stop element.

The stop element may be rotationally movable between the free position and the blocking position. Accordingly, the prominence is angularly movable. Thus, the prominence is movable between being placed against the at least one support and at least partially projecting from the border for locating the stop element.

The at least one support may comprise a first elastically movable pin for the fitted arrangement by snap fitting in the at least one fitting area. Optionally, the at least one support comprises a second rigid pin for being arranged fitted in one of the fitting areas.

The at least one fitting area may be configured by way of a hole for receiving by partial fitting the at least one support. Preferably, there are two fitting areas for the fitted arrangement of the at least one support in the hollow space.

Likewise, preferably, the fitting areas may be found in the body according to locations facing one another.

Preferably, the body may comprise depressions for supporting the cover in the closed position, the depressions being arranged such that they determine routes for external substances, such as solid particles or liquids, falling into the hollow space and cable housing.

### Description of the figures

Figure 1 shows a schematic perspective view of a body and a cover separated from one another and comprised in a floor-mounted electrical box object of the invention.
Figure 2 shows a schematic perspective view of the floor-mounted electrical box object of the invention, with the box being closed.
Figure 3 shows a schematic perspective view of a projection and a cavity comprised in the floor-mounted electrical box, with the projection being housed in the cavity.
Figure 4 shows a schematic perspective view of the cover and tabs comprised in the floor-mounted electrical box object of the invention.
Figures 5A and 5B show schematic perspective views of the cover and the tabs, placed and not placed, respectively.
Figures 6A, 6B and 6C show schematic views of the tab as a whole, sectioned and placed in addition to sectioned.
Figure 7 shows an exploded schematic view of a support comprised in the floor-mounted electrical box object of the invention.
Figure 8 shows a schematic perspective view of a stop element comprised in the floor-mounted electrical box object of the invention.
Figure 9 shows a schematic perspective view of the body and three of the supports, with the supports arranged in a fitted manner and fixed on the body.
Figures 10 and 11 show schematic perspective views of the support according to a blocking position and a free position, respectively.

### Detailed description of the invention

The present invention relates to a floor-mounted electrical box comprising a body (1), a cover (2), at least one support (3) configured for housing electrical equipment such as electrical elements and data elements, by way of electrical and/or data outlets, differential switches, etc., and at least one fitting area (4) for the fitted arrangement of the support (3), in addition to placement means for placing the cover (2) on the body (1). The floor-mounted electrical box is configured for being packed or inserted in the floor such that the cover (2) is level or flush with the floor, i.e., as a continuation of the floor.

The body (1) can be made of a plastic material and a metallic material, only a metallic material or only a plastic material. The cover (2), in turn, can be made of a plastic material and a metallic material, only a metallic material or only a plastic material.

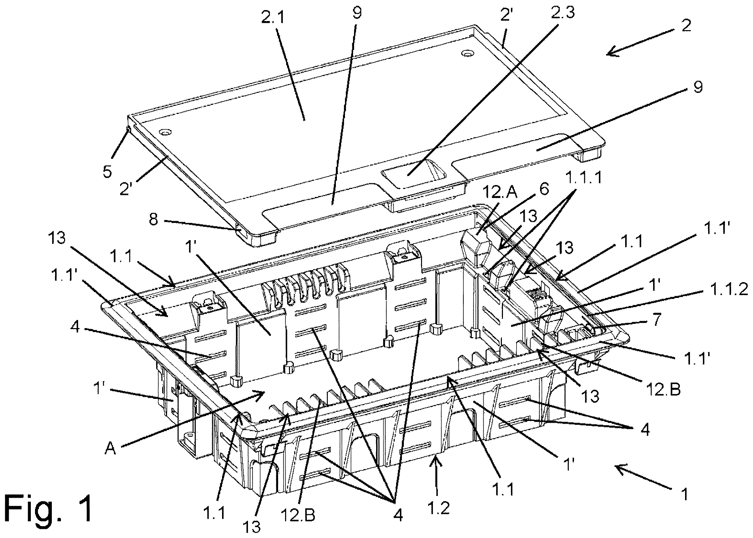

The body (1) comprises side walls (1') arranged forming a closed contour, such that they determine a hollow space (A) which said side walls (1') laterally go around or surround, and an access opening (1.1) for accessing the inside of the body (1) from outside the same, i.e., accessing the hollow space (A). See Figure 1.

The side walls (1') have a rim (1.1') defining the access opening (1.1). In the side walls (1'), the floor-mounted electrical box optionally comprises at least one perforation (1.1.1) determining a passage for draining off liquid externally with respect to the hollow space (A) such that liquid can be removed or extracted from the hollow space (A) out of the box, and more specifically out of the body (1). Each of these perforations (1.1.1) is located close to the rim (1.1') or the access opening (1.1). Thus, contact of the liquid with the supports (3) and the corresponding electrical equipment is avoided. The arrangement of said perforations (1.1.1) is particularly relevant in the bodies (1) at least partially made of a metallic material, regardless of the material from which the cover (2) is made.

Additionally, the body (1) comprises an outlet opening (1.2) located opposite the access opening (1.1), i.e., each of these openings (1.1, 1.2) is located at a different end of the body (1) according to a longitudinal extension or depth thereof.

The cover (2) is available for closing the body (1), specifically in correspondence with the access opening (1.1). Accordingly, the floor-mounted electrical box comprises placement means for, in addition to placing the cover (2) on the body (1), moving the cover (2) between an open position, in which access to the hollow space (A) is provided, and a closed position, in which access to the mentioned hollow space (A) is at least partially blocked.

For the purpose of providing these movements of the cover (2), the placement means comprise at least one projection (5) and a cavity (6) for establishing a movable attachment between the cover (2) and the body (1). Said movements by means of the movable attachment preferably occur by rotating or pivoting the cover (2) with respect to the body (1).

Preferably, there are two projections (5) and two cavities (6), one for each of the projections (5). Accordingly, one of the projections (5) and one of the cavities (6) are situated in a complementary manner in correspondence with a corner of the cover (2) and the access opening (1.1), while another one of the projections (5) and another one of the cavities (6) are situated in a complementary manner in correspondence with another corner of the cover (2) and the access opening (1.1), said corners being joined by means of a border of the cover (2) and a side of the access opening (1.1).

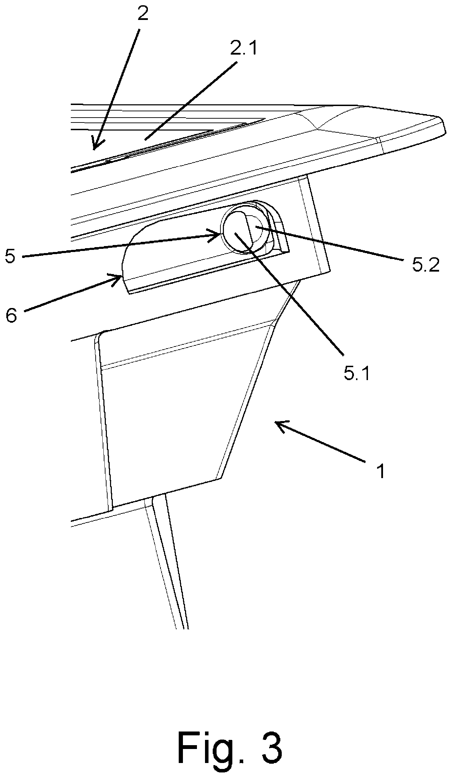

Preferably, the projections (5) are situated in the cover (2), and more specifically in correspondence with said corners of the cover (2), such that they are joined by the mentioned border; and the cavities (6) are situated in the body (1), and more specifically in correspondence with said corners of the access opening (1.1), such that they are joined by the mentioned side. See Figures 1 and 3.

Alternatively, and in the line of what is described for the preferred case, the projections (5) are situated in the body (1), and more specifically in correspondence with said corners of the access opening (1.1), such that they are joined by the mentioned side; and the cavities (6) are situated in the cover (2), and more specifically in correspondence with said corners of the cover (2), such that they are joined by the mentioned border.

According to what has been described, the placement means act as an articulation between the cover (2) and the body (1) for movements between the open position and the closed position, as each of the projections (5) is arranged in one of the cavities (6) with the possibility of rotation.

Additionally, the placement means are configured such that each of the projections (5) can be placed and removed with respect to the corresponding cavity (6) by snap fitting. In the event of unwanted stresses or impacts received in the cover (2), said cover (2) is thereby released with respect to the body (1), avoiding structural breaks in the floor-mounted electrical box; i.e., structural breaks in the body (1), in the cover (2), in the supports (3) and/or in the fitting areas (4).

Accordingly, at least one of the projections (5), and preferably both, has a first portion (5.1) extending externally in a progressive manner and a second portion (5.2) extending externally in an abrupt manner. The projections (5) can thereby be retained and rotated, being located in the cavities (6) by contact through the second portions (5.2). Likewise, the projections (5) can be placed and removed with respect to the cavities (6) by the first portions (5.1), which provide and facilitate snap fitting.

Additionally, the cavities (6) have an elongated configuration such that they establish a course for movement of the projections (5) along the same, as can be seen in Figure 3. This configuration of the cavities (6) provides for opening the floor-mounted box to a greater extent according to the open position. For this purpose, an end of the cavity (6) can additionally be arranged closer to the access opening (1.1) than to the outlet opening (1.2) according to the closed position.

Thus, said end of the cavity (6) closer to the access opening (1.1) is, according to the closed position, additionally located closer to a part having a larger separation between the cover (2) and the body (1) in the open position than to a part having a smaller separation between the cover (2) and the body (1) in said open position; i.e., closer to the area of aperture than to an area of articulation between the cover (2) and the body (1) of the present box.

Therefore, the cavities (6) are thereby sized for a sliding or movement of the projections (5) therein such that an angle between the cover (2) and the access opening (1.1) is increased or maximised in the open position.

Preferably, according to the embodiment the cavities (6) are located in two of the borders of the cover (2) opposite or facing one another, or alternatively in two of the sides of the access opening (1.1) opposite or facing one another.

The floor-mounted electrical box comprises closure means for establishing a removable fixing of the cover (2) according to the closed position. Said fixing means comprise at least one embossment (7) and a notch (8), wherein the embossment (7) can be placed and removed with respect to the notch (8) by snap fitting. Preferably, there are two embossments (7) and two notches (8), one for each of the embossments (7).

Accordingly, one of the embossments (7) and one of the notches (8) are arranged in a complementary manner in correspondence with one of the corners of the cover (2) and one of the corners of the access opening (1.1), while another one of the embossments (7) and another one of the notches (8) are situated in a complementary manner in correspondence with another one of the corners of the cover (2) and another one of the corners of the access opening (1.1), said corners being joined by means of another border of the cover (2) and another side of the access opening (1.1).

Preferably, the embossments (7) are situated in the body (1), and more specifically in correspondence with said corners of the access opening (1.1), such that they are joined by the mentioned other side; and the notches (8) are situated in the cover (2), and more specifically in correspondence with said corners of the cover (2), such that they are joined by the mentioned other border. See Figure 1.

Alternatively, and in the line of what is described for the preferred case, the embossments (7) are situated in the cover (2), and more specifically in correspondence with said corners of the cover (2), such that they are joined by the mentioned other border; and the notches (8) are situated in the body (1), and more specifically in correspondence with said corners of the access opening (1.1), such that they are joined by the mentioned other side.

Therefore, the border of the cover (2) joining the corners of the cover (2) in which the projections (5) or alternatively the cavities (6) are located is opposite the other border of the cover (2) joining the corners of the cover (2) in which the embossments (7) or alternatively the notches (8) are located.

Likewise, the side of the access opening (1.1) joining the corners of the cover (2) in which the cavities (6) or alternatively the projections (5) are located is opposite the other side of the access opening (1.1) joining the corners of the cover (2) in which the embossments (7) or alternatively the notches (8) are located.

According to the closed position, the cover (2) contacts the body (1). More specifically, the cover (2) contacts first depressions (12.A) and second depressions (12.B) comprised in said body (1). The present box thereby provides discontinuous support of the cover (1) against the body (1). That is, said depressions (12.A, 12.B) form a battlement-type arrangement to provide points of contact with the cover (2) in the closed position.

The main object of this configuration is to provide routes (13) for solid objects, such as stones for example, falling into the hollow space (A). Thus, the corresponding unwanted objects being arranged as a support of the cover (2) in the closed position is minimised or even eliminated. Risk of the cover (2) breaking, for example from people stepping on the cover (2), is thereby minimised or even eliminated.

Likewise, the routes (13) are for channeling external unwanted liquids, such that they are led through a part spaced apart from the location of the electrical equipment which can be housed in the supports (3).

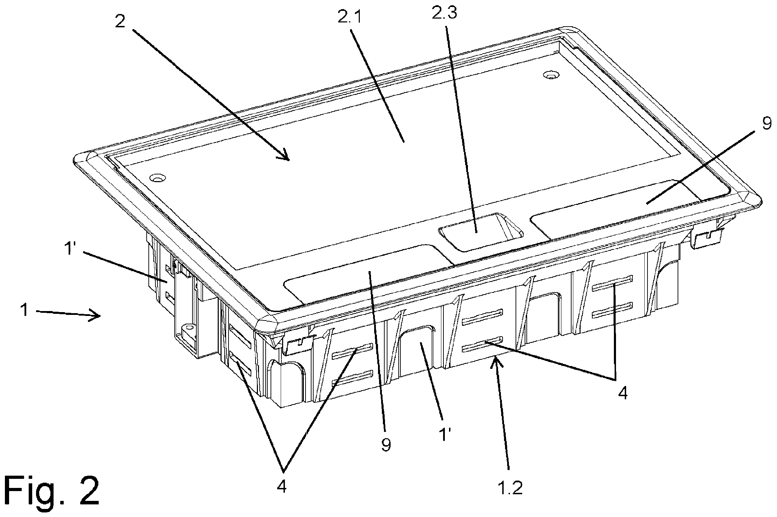

The cover (2) comprises an outer face (2.1) and an inner face (2.2), in addition to a handle (2.3). With the electrical box being arranged in the floor and the cover (2) according to the closed position (Figure 2), the outer face (2.1) is visible from outside the electrical box whereas the inner face (2.2) is visible from within the box, i.e., from the hollow space (A).

The handle (2.3) is located on the outer face (2.1) of the electrical box. Said handle (2.3) is an integral part of the cover (2), i.e., they are one and the same element or part. Accordingly, the handle (2.3) is defined as a hollowed-out notch. It is thereby readily and directly accessible from outside the electrical box, in addition to being structurally resistant.

The body (1) comprises a recess (1.1.2) for supporting the cover (2). Accordingly, the cover (2) comprises a projecting or cantilevered fin (2') as a continuation of the cover (2) according to the outer face (2.1). The cover (2) contacts the depressions (12.A, 12.B) through the inner face (2.2).

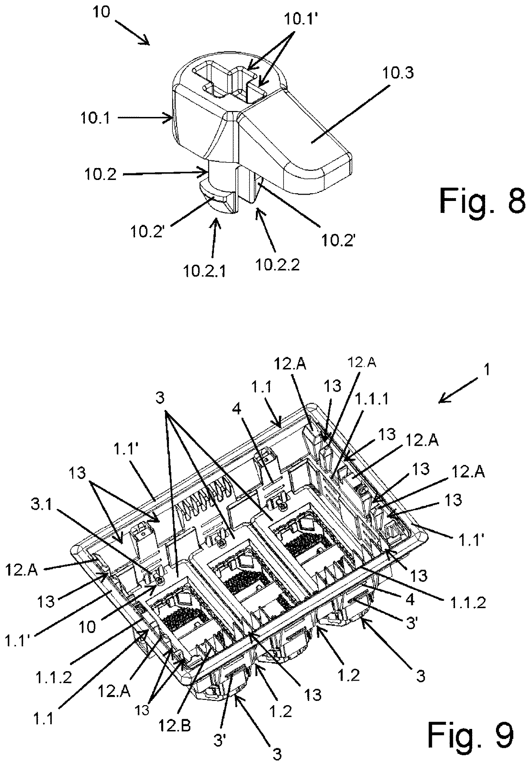

The recess (1.1.2) and the fin (2') are located in accordance with at least one of the sides of the access opening (1.1), or one of the side walls (1'), and with at least one of the borders of the cover (2), respectively. Preferably, the recess (1.1.2) and/or the fin (2') extend in a continuous manner. The coupling of the fin (2') on the recess (1.1.3) together with the corresponding part of each of the corresponding sides of the access opening provides a seal against the entry of unwanted liquids into the hollow space (A). See Figures 1 and 9.

Preferably, the recess (1.1.2) and the fin (2') are located in accordance with at least three of the sides of the access opening (1.1) or at least three of the side walls (1'), and with at least three of the borders of the cover (2), respectively. Accordingly, when the recess (1.1.2) and the fin (2') are located in accordance with three of the sides of the access opening (1.1) or three of the side walls (1'), and with three of the borders of the cover (2), respectively, both the border and the side joining the corners of the cover (2) and the access opening (1.1), respectively, in which the projections (5) and the cavities (6) are located are free or are devoid of the mentioned recess (1.1.2) and the mentioned fin (2').

The cover (2) comprises at least one tab (9), the tab (9) being coupleable on the cover (2) in a removable manner for partially covering the access to the hollow space (A). Accordingly, the floor-mounted electrical box, and more specifically the cover (2), is devoid of adhesive or elements for a non-removable fixing of the tabs (9) in the cover (2). Said tabs (9) can thereby be readily replaced and released with respect to the cover (2) in the event of unwanted stresses which would otherwise damage or break the cover (2).

Additionally, some of the previously mentioned routes (13) are determined, more specifically by means of the second depressions (12.B), in the body (1) in correspondence with the access opening (1.1) as a support for the cover (2), and more specifically the tabs (9). Therefore, the second depressions (12.B), and therefore also the corresponding routes (13), additionally act as conducting portions or areas for the guided arrangement of cables extended through the access opening (1.1).

According to the longitudinal extension or depth of the body (1), the rim (1.1'), the recess (1.1.2), the depressions (12.A, 12.B) with the routes (13), and the perforations (1.1.1) are located consecutively from the access opening (1.1) to the outlet opening (1.2), as can be seen in Figure 1.

The tab (9) is preferably one-piece. One, two or more of the mentioned tabs (9), mainly depending on the number of cables to be arranged through the cover (2) or the access opening (1.1), can be coupled on the cover (2).

Likewise, the tab (9) is at least partially elastically deformable such that, with the tab (9) coupled on the cover (2) partially covering the access to the hollow space (A), it is deformable establishing a passage into the hollow space (A). This elastic deformation occurs such that this passage is determined in correspondence with the part of the access opening (1.1) covered by the tab (9) without being deformed. Accordingly, the passage can be defined by elastic deformation of the tab (9) such that one or several cables are available through said passage, while said tab (9) remains coupled on the cover (2).

Since the tabs (9) are made of an elastically deformable material, the tabs (9) can be uncoupled with respect to the cover (2) by means of tensile stress or an impact, with the integrity of the tabs (9) and at the same time of the cover (2) being maintained, such that they can then be placed again to perform their function.

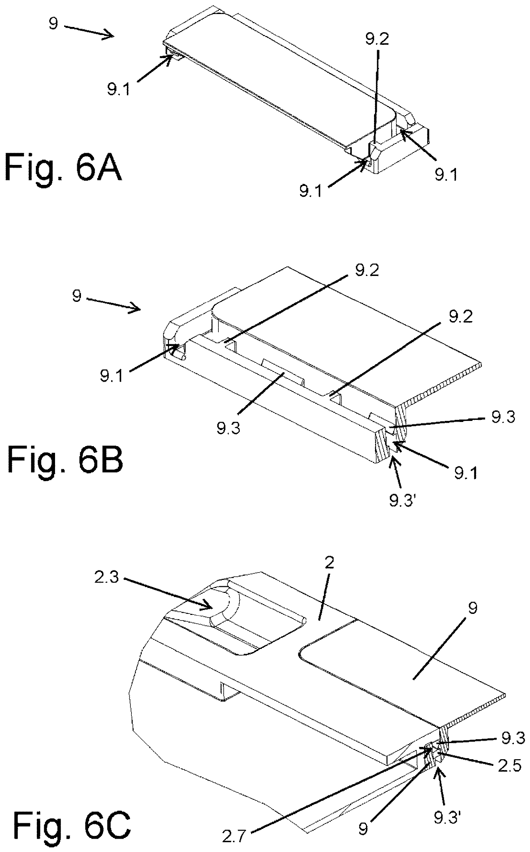

The tab (9) has a channel (9.1) in correspondence with three sides thereof. This channel (9.1) is defined with a U-shaped cross section by means of a bottom and two side flaps. Furthermore, the tab (9) preferably has walls (9.2) distributed transversely along the extension of the channel (9.1) joining said flaps and the bottom forming a U-shape to one another to stiffen the channel (9.1). See, for example, Figures 6A, 6B and 6C.

Also preferably, the tab (9) has protuberances (9.3) for acting as engagements on the cover (2) and securing same. Preferably, said protuberances (9.3) are located in one of the U-shaped flaps of the channel (9.1), which is a direct extension of the portion intended to be deformed for the passage of the corresponding cables, as clearly results from Figure 6B, although it can alternatively be in the other flap.

The cover (2) has slots (2.4) for arranging the tabs (9). The cover (2) has a profile (2.5) configured for being housed in the channel (9.1) of the corresponding tab (9).

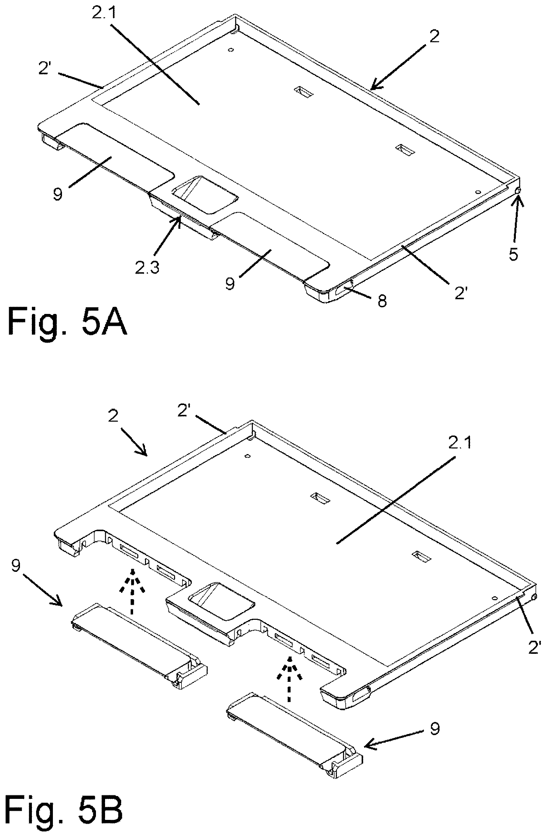

Accordingly, the tabs (9) can be placed in the cover (2), and more specifically in the slots (2.4), being moved from the inner face (2.2) to the outer face (2.1). Thus, the cover (2), and more specifically the corresponding profile (2.5), is tightly housed in the channel (9.1), such that it is arranged by a removable coupling. See Figure 5B.

The described movement of the tabs (9) with respect to the cover (2) provides the present box with the effective capacity to keep the tabs (9) placed in the cover (2), and more specifically in the slots (2.4), with said tabs (9) at the same time being externally elastically deformable with respect to the hollow space (A) for the passage of the corresponding cables. The use of adhesives or the like for ensuring the fixed attachment between said tabs (9) and the cover (2) as they are simultaneously deformed by contact against the cables is thus avoided. The tabs (9) can therefore be removed in addition to being placed for cleaning or substitution in a quick and simple manner.

Furthermore, preferably the cover (2) has grooves (2.6) distributed along the extension of the profile (2.5) in a complementary manner with respect to the walls (9.2). These grooves (2.6) extend in a direction for the attachment between the outer face (2.1) and the inner face (2.2) according to a minimum course; that is, they extend in a manner that is perpendicular or substantially perpendicular to a plane forming the outer face (2.1) and/or the outer face (2.1).

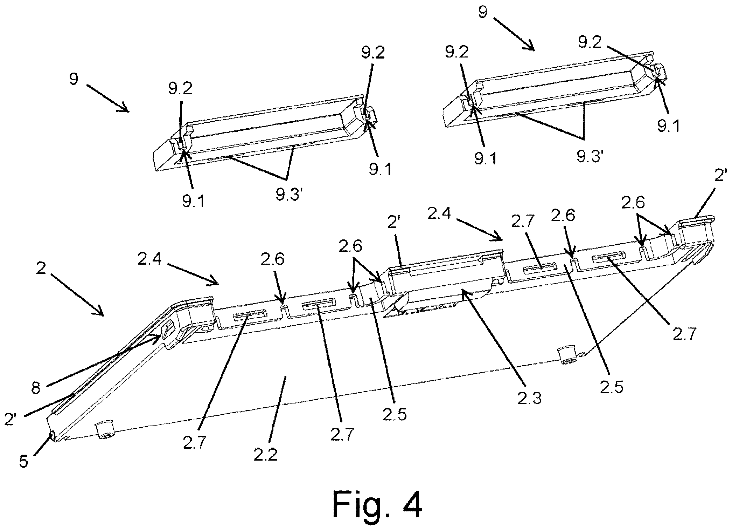

The grooves (2.6) and the walls (9.2) are thereby defined for the housing or fitting, preferably by pressure, of said walls (9.2) in said grooves (2.6), contributing to a coupled positioning of the tabs (9) in the cover (2), and more specifically in the slots (2.4). Likewise, the grooves (2.6) have an open end in accordance with the part closer to the inner face (2.2), as can be seen in Figure 4, for example, to provide the housing or fitting of said walls (9.2).

The walls (9.2) are configured for being elastically deformed both for their insertion in the grooves (2.6) and for their removal with respect to said grooves (2.6).

Also preferably, the cover (2) has perforations (2.7) distributed along the extension of the profile (2.5) in a complementary manner with respect to the protuberances (9.3). These perforations (2.7) extend in a direction preferably perpendicular or substantially perpendicular to the direction for the attachment between the outer face (2.1) and the inner face (2.2) according to the minimum course; that is, they extend in a manner that is parallel or substantially parallel to the plane forming the outer face (2.1) and/or the outer face (2.1).

The perforations (2.7) and the protuberances (9.3) are thereby defined for a housing or fitting, preferably by pressure, of said perforations (2.7) in said perforations (2.7), contributing to the coupled positioning of the tabs (9) in the cover (2), and more specifically in the slots (2.4). Accordingly, the protuberances (9.3) have a toothed shape for better securing, although this securing can be removed. The protuberances (9.3) are configured for being elastically deformed both for insertion in the perforations (2.7) and for their removal with respect to said perforations (2.7).

According to the arrangement of the perforations (2.7), the tabs (9) have passages (9.3'). These passages (9.3') facilitate the placement of the tabs (9) in the slots (2.4), according to the upward movement indicated in Figure 5B by means of thick dashed arrows. More specifically, said passages (9.3') facilitate the placement and removal of the protuberances (9.3) with respect to the perforations (2.7).

Additionally, in the outermost flap, the one opposite where the protuberances (9.3) are arranged, a step is situated as a support for the profile (2.5). This step and one of the mentioned passages (9.3') can be seen in Figures 6B and 6C.

There are one, two, three, four, five or more supports (3) comprised in the floor-mounted electrical box. Accordingly, there are one, two, three, four, five or more fitting areas (4) comprised in the floor-mounted electrical box.

The floor-mounted electrical box thereby preferably comprises one of the fitting areas (4) for each of the supports (3), and more preferably two, for the fitted arrangement of each of the supports (3) in the hollow space (A). When there are two fitting areas (4) for each of the supports (3), these areas (4) are preferably situated in the body (1), and more specifically in the hollow space (A), according to locations facing one another.

The supports (3) comprise at least one projection (3'), and preferably two, for being arranged fixed in a removable manner in the body (1), and more specifically in correspondence with the hollow space (A).

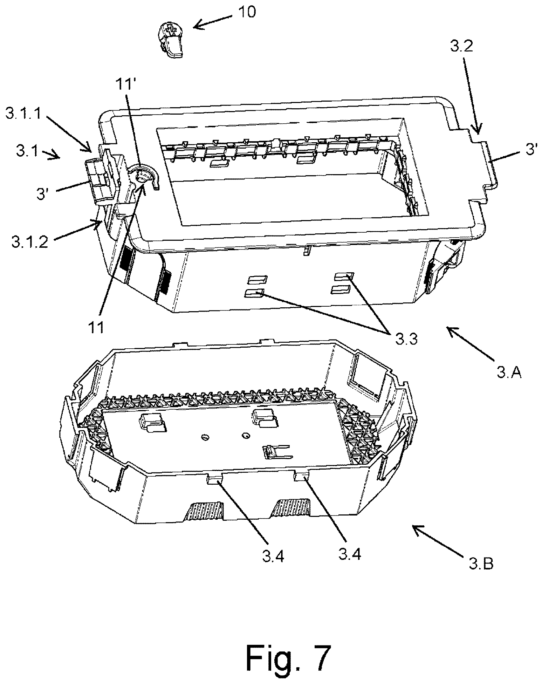

Preferably, the supports (3) comprise a first elastically movable pin (3.1) for the fitted arrangement by snap fitting in the corresponding fitting area (4). Accordingly, a free extremity (3.1.1) of the first pins (3.1) is situated in a separated position with respect to the support (3), said first pins (3.1) being free of stresses. See Figures 7, 10 and 11.

The free extremity (3.1.1) of the first pins (3.1) in addition to the corresponding projections (3'), are located in accordance with an upper part of the supports (3), i.e., a part for the insertion of the electrical and/or data elements therein. An attachment extremity (3.1.2) of the first pins (3.1), opposite the free extremity (3.1.1), with respect to the rest of the supports (3), is attached to the corresponding support (3) at a lower or axially spaced point with respect to the upper part of the supports (3) according to the axial direction for the insertion of the electrical and/or data elements in the supports (3).

The free extremity (3.1.1) as well as the projection (3') it incorporates is thereby movable according to an angular path, i.e., not linear or rectilinear.

Likewise, said free extremity (3.1.1) is movable towards the support (3) for being arranged in the corresponding fitting area (4) such that it recovers the separated position by itself for the fitting in the corresponding fitting area (4).

Additionally, the supports (3) comprise a second rigid pin (3.2) projecting externally with respect to the supports (3), for being arranged one fitted in the other, second fitting area (4) comprised in the box for each of the supports (3). Said second pin (3.2) together with its corresponding projection (3') is located in accordance with the upper part of the supports (3), i.e., the mentioned part for the insertion of the electrical and/or data elements therein.

Alternatively, there are two first pins (3.1) comprised in the supports (3), i.e., the two are elastically movable, for the fitted arrangement by snap fitting of each of said first pins (3.1) in the corresponding fitting area (4). The supports (3) are thereby devoid of the second pin (3.2).

According to both options, each of the mentioned pins (3.1, 3.2) has at least one of the projections (3') for being fitted in the corresponding fitting area (4). That is, the fitting of the pins (3.1, 3.2) in the fitting areas (4) is performed by means of the projections (3') arranged to that end, preferably pointing externally with respect to the rest of the supports (3), in the mentioned fitting areas (4).

Said supports (3) are preferably formed by means of coupling a main part (3.A) and a base (3.B), the main part (3.A) and the base (3.B) being coupleable to one another. See for example Figure 7. Accordingly, the first pin (3.1) and the second pin (3.2), in the event that they are comprised in the corresponding support (3), are located in the main part (3.A) of said support (3).

Likewise, the fitting areas (4) are configured in the form of preferably slotted holes, for receiving the supports (3) and more specifically the projections (3') by partial fitting.

The floor-mounted electrical box additionally comprises fixing means for fixing the support (3) arranged in a fitted manner in the corresponding fitting area (4). The fixing means comprise a stop element (10) for each of the supports (4) to be arranged in the hollow space (A). The stop element (10) comprises a head (10.1) and a rod (10.2) preferably split into two parts (10.2.1, 10.2.2), a first part (10.2.1) and a second part (10.2.2), in addition to a prominence (10.3) projecting radially and externally with respect to the head (10.1). See Figure 8.

The rod (10.2), in turn, preferably has a tooth (10.2') for a corresponding engagement with the support (3), and more preferably two teeth (10.2'), one in each of the mentioned parts (10.2.1, 10.2.2). The rod (10.2), and where appropriate said corresponding parts (10.2.1, 10.2.2), extend axially from a face of the head (10.1).

The stop element (10) is configured such that the rod (10.2), and where appropriate at least one of the two parts (10.2.1, 10.2.2), is elastically movable for facilitating their arrangement in the corresponding support (3). Specifically, the teeth (10.2') are arranged at a free end of the rod (10.2), and where appropriate at free ends of at least one of the two parts (10.2.1, 10.2.2). Preferably, the two parts (10.2.1, 10.2.2) are elastically movable for facilitating the arrangement of the stop element (10) in the corresponding support (3), and more specifically in the main part (3.A) of the corresponding support (3).

The head (10.1) has one or several furrows (10.1') arranged for being acted on by means of tools, such as a flat head, star, square head, Torx, socket or hexagonal screwdriver, and an Allen wrench. Said furrows (10.1') are located on the other face of the head (10.1), which is opposite the face where the rod (10.2), and where appropriate the corresponding parts (10.2.1, 10.2.2), are located.

Accordingly, when the supports (3) comprise the first pin (3.1) and the second pin (3.2), the stop element (10) is located such that it is in correspondence close to the first pin (3.1) such that it can fix the supports (3) arranged in a fitted manner in the corresponding fitting areas (4).

When the supports (3) comprise two of the first pins (3.1), preferably the stop elements (10) are located such that they are in correspondence close to each of the first pins (3.1) such that they can fix the supports (3) arranged in a fitted manner in the corresponding fitting areas (4). Alternatively, the stop element (10) is located such that it is in correspondence close to one of the two first pins (3.1) such that they can fix the supports (3) arranged in a fitted manner in the corresponding fitting areas (4).

The fixing means comprise a locating point (11) for the inserted arrangement of the stop elements (10) in the supports (3), and more specifically in the main parts (3.A) of the supports (3). See Figure 7.

Thus, the locating points (11) are configured for receiving and housing the rod (10.2), and where appropriate the corresponding parts (10.2.1, 10.2.2), according to elastic deformation. Accordingly, the rod (10.2) can be inserted under pressure in said locating point (11) or the two parts (10.2.1, 10.2.2) can be brought closer to one another at the free ends, such that the teeth (10.2') can be tightly introduced in the corresponding locating point (11) according to their dimension and geometry.

Additionally, the locating points (11) are configured having a thickness such that once the teeth (10.2') goes through them in the insertion of the stop elements (10) in said points (11), the teeth (10.2') are free of compression stresses for fixing the stop elements (10).

When the rod (10.2) is split into the two parts (10.2.1, 10.2.2), the free ends recover a position spaced from one another due to the elastic deformation or mobility they have. Said parts (10.2.1, 10.2.2) are thereby adjusted according to the dimension and geometry of the locating points (11).

The stop element (10), and more specifically the rod (10.2), is arranged axially inserted in the corresponding locating point (11) such that it is axially retained in one direction by the corresponding teeth (10.2') and in the other direction by the head (10.1).

In turn, the stop element (10) is arranged inserted in the corresponding locating point (11) such that it is movable between a free position, in which the corresponding support (3) can be fitted and taken out with respect to the corresponding fitting area (4), and a blocking position, in which the corresponding support (3) can be blocked against being taken out with respect to the corresponding fitting area (4).

For this, i.e., for being movable between the free position and the blocking position, the stop element (10) is preferably arranged free of being angularly rotated. That is, the stop element (10) is movable by rotation with respect to a central longitudinal imaginary axis of the head (10.1). Preferably, this rotation of the stop element (10) in the corresponding locating point (11) is preferably between 0° and 135°, more preferably between 0° and 110°, and even more preferably between 0° and 90°.

Accordingly, the furrows (10.1') are arranged for acting on the stop elements (10). Preferably, the furrows (10.1') are therefore arranged specifically in the heads (10.1) of said stop elements (10), such that they can be operated to be rotated, i.e., such that the prominences (10.3) are angularly moved.

Accordingly, and preferably, the locating points (11) have a bulge (11') which determines or limits the angular rotation of the stop elements (10) therein, preferably in both directions of rotation. See Figures 7, 10 and 11.

The locating points (11) are situated in the supports (3), in correspondence with sides where the first pins (3.1) are located. The stop elements (10) are thereby arranged in correspondence close to each of the first pins (3.1).

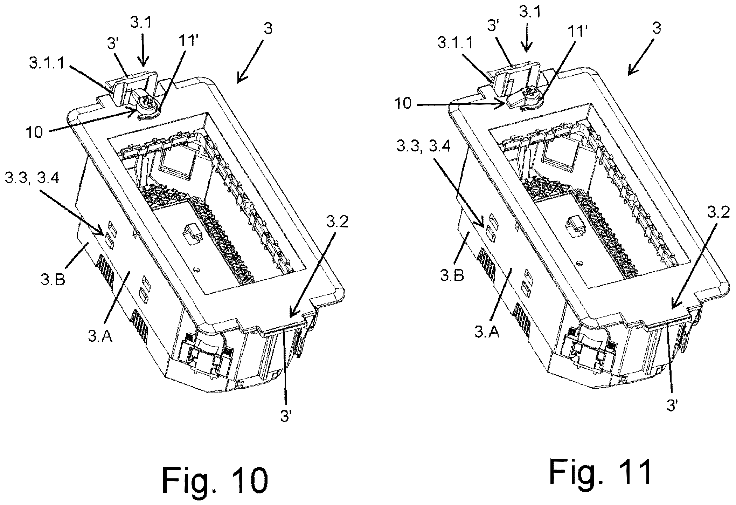

In the free position, Figure 11, the stop elements (10) are placed against the supports (3), i.e., they are devoid of parts or portions which project in a horizontal plane with respect to the supports (3), such as the prominences (10.3). The first pins (3.1), and specifically their free extremities (3.1.1), are thereby free of being arranged in a close position or even a contact position with respect to the supports (3), and more specifically the main part (3.A) of said supports (3), and according to the separated position.

In the blocking position, Figure 10, the stop elements (10) are situated projecting from a border of the sides where they or the first pins (3.1), i.e., the supports (3), and more precisely the main parts (3.A), are located. More specifically, in said blocking position, the prominences (10.3) project from the border of the sides where the stop elements (10), or the first pins (3.1), i.e., the supports (3), and more precisely the main parts (3.A), are located.

Thus, according to said blocking position, due to contact against the stop elements (10), and more specifically against the prominences (10.3), the first pins (3.1), and specifically their free extremities (3.1.1), are prevented or blocked from being moved with respect to the separated position and the rest of the supports (3), or in other words they are prevented or blocked from being arranged according to the close or contact position with respect to the supports (3), and more specifically the main part (3.A) of said supports (3).

The stop elements (10) are thereby arranged for being positioned according to the free position for the arrangement and removal of the supports (3), more specifically the first pins (3.1), and even more specifically the projections (3') of the first pins (3.1), with respect to the fitting areas (4). Likewise, the stop elements (10) are arranged for being positioned according to the blocking position for preventing the exit of the projections (3') with respect to the corresponding fitting areas (4), fixing their arrangement in the hollow space (A).

## Claims

1. A floor-mounted electrical box, comprising:
- a body (1) which comprises side walls (1') defining a hollow space (A) with a closed contour and an access opening (1.1) into the hollow space (A);
- at least one support (3) configured for housing electrical and/or data elements;
- at least one fitting area (4) for the fitted arrangement of the at least one support (3) in the hollow space (A);
- a cover (2) comprising an outer face (2.1) and an inner face (2.2) opposite the outer face (2.1) and arrangeable facing the hollow space (A), the cover (2) being for closing the access opening (1.1);
- placement means for placing the cover (2) on the body (1), the placement means being arranged for moving the cover (1) between an open position, providing access to the hollow space (A), and a closed position, blocking access to the hollow space (A);
wherein the placement means comprise at least one projection (5) and at least one cavity (6) for establishing a movable attachment between the cover (2) and the body (1);
**characterized in that** the at least one projection (5) has a first portion (5.1) and a second portion (5.2), wherein said first portion (5.1) that extends externally in a progressive manner for being able to place and remove the at least one projection (5) with respect to the at least one cavity (6) by snap fitting, and wherein
said second portion (5.2) extends externally in an abrupt manner for a retention provided by contact of the second portion (5.2) with the at least one cavity (6), such that the projection (5) can be removed and be free to rotate in the at least one cavity (6).

2. The floor-mounted electrical box according to claim 1, wherein said at least one cavity (6) has an elongated configuration providing a sliding movement and the rotational movement of the at least one projection (5) being placed within the at least one cavity (6).

3. The floor-mounted electrical box according to claim 1 or 2, wherein it comprises at least one perforation (1.1.1) in at least one of the side walls (1'), the perforation (1.1.1) being arranged such that it determines a passage for draining off liquid externally with respect to the hollow space (A).

4. The floor-mounted electrical box according to any one of claims 1 to 3, wherein the body (1) comprises a recess (1.1.2) and the cover (2) comprises a fin (2'), such that in the closed position the fin (2') is coupled and in contact with respect to the body (1) in correspondence with the recess (1.1.2) to provide a leak-tight attachment between the cover (2) and the body (1).

5. The floor-mounted electrical box according to any one of claims 1 to 4, wherein the cover (2) comprises at least one tab (9), the tab (9) being coupleable on the cover (2) in a removable manner for partially covering the access to the hollow space (A) by means of a movement from the inner face (2.2) to the outer face (2.1).

6. The floor-mounted electrical box according to claim 5, wherein the tab (9) is at least partially elastically deformable such that, with the tab (9) coupled on the cover (2) partially covering the access to the hollow space (A), it is deformable establishing a passage into the hollow space (A).

7. The floor-mounted electrical box according to any one of claims 1 to 6, wherein the at least one support (3) comprises a first elastically movable pin (3.1) for the fitted arrangement by snap fitting in the at least one fitting area (4).

8. The floor-mounted electrical box according to any one of claims 1 to 7, wherein it additionally comprises fixing means for fixing the at least one support (3) arranged in a fitted manner in the at least one fitting area (4).

9. The floor-mounted electrical box according to claim 8, wherein the fixing means comprise a stop element (10) in the at least one support (3), the stop element (10) being movable between a free position, in which the at least one support (3) can be fitted and taken out with respect to the at least one fitting area (4), and a blocking position, in which the at least one support (3) can be blocked against being taken out with respect to the at least one fitting area (4).

10. The floor-mounted electrical box according to claim 9, wherein the stop element (10) comprises a prominence (10.3) for determining the free and blocking position.

11. The floor-mounted electrical box according to claim 9 or 10, where in the free position the stop element (10) is placed against the at least one support (3), and in the blocking position the stop element (10) is partially projecting from a border for locating same.

12. The floor-mounted electrical box according to any one of claims 9 to 11, wherein the stop element (10) is rotationally movable between the free position and the blocking position.

13. The floor-mounted electrical box according to any one of claims 1 to 12, wherein the at least one support (3) comprises a second rigid pin (3.2) for being arranged fitted in one of the fitting areas (4).

14. The floor-mounted electrical box according to any one of claims 1 to 13, wherein the body (1) comprises depressions (12.A, 12.B) for supporting the cover (2) in the closed position, the depressions (12.A, 12.B) being arranged such that they determine routes (13) for external substances falling into the hollow space (A) and cable housing.

## Patentansprüche

1. Elektrobodentank, der aufweist:
- einen Körper (1), der Seitenwände (1'), die einen Hohlraum (A) mit einer geschlossenen Kontur bilden, und eine Zugangsöffnung (1.1) in den Hohlraum (A) aufweist;
- mindestens einen Träger (3), der zum Unterbringen von Elektro- und/oder Datenelementen konfiguriert ist;
- mindestens einen Einpassbereich (4) zur eingepassten Anordnung des mindestens einen Trägers (3) im Hohlraum (A);
- eine Abdeckung (2) mit einer Außenfläche (2.1) und einer Innenfläche (2.2), die entgegengesetzt zur Außenfläche (2.1) und zum Hohlraum (A) weisend anordnungsfähig ist, wobei die Abdeckung (2) zum Schließen der Zugangsöffnung (1.1) dient;
- eine Platzierungseinrichtung zum Platzieren der Abdeckung (2) auf dem Körper (1), wobei die Platzierungseinrichtung zum Bewegen der Abdeckung (1) zwischen einer offenen Position, die Zugang zum Hohlraum (A) bereitstellt, und einer geschlossenen Position, die Zugang zum Hohlraum (A) blockiert, angeordnet ist;
wobei die Platzierungseinrichtung mindestens einen Vorsprung (5) und mindestens eine Aushöhlung (6) zum Herstellen einer beweglichen Befestigung zwischen der Abdeckung (2) und dem Körper (1) aufweist;
**dadurch gekennzeichnet, dass** der mindestens eine Vorsprung (5) einen ersten Abschnitt (5.1) und einen zweiten Abschnitt (5.2) hat, wobei der erste Abschnitt (5.1), der sich extern fortlaufend erstreckt, dazu dient, den mindestens einen Vorsprung (5) im Hinblick auf die mindestens eine Aushöhlung (6) durch Schnappverbindung platzieren und entfernen zu können, und wobei
sich der zweite Abschnitt (5.2) extern abrupt für einen Halt erstreckt, der durch Kontakt des zweiten Abschnitts (5.2) mit der mindestens einen Aushöhlung (6) zustande kommt, so dass der Vorsprung (5) entfernt werden und in der mindestens einen Aushöhlung (6) frei drehen kann.

2. Elektrobodentank nach Anspruch 1, wobei die mindestens eine Aushöhlung (6) eine längliche Konfiguration hat, die für eine Gleitbewegung und die Drehbewegung des mindestens einen Vorsprungs (5) sorgt, der in der mindestens einen Aushöhlung (6) platziert ist.

3. Elektrobodentank nach Anspruch 1 oder 2, wobei er mindestens eine Perforation (1.1.1) in mindestens einer der Seitenwände (1') aufweist, wobei die Perforation (1.1.1) so angeordnet ist, dass sie einen Durchgang zum Ablassen von Flüssigkeit nach außen im Hinblick auf den Hohlraum (A) festlegt.

4. Elektrobodentank nach einem der Ansprüche 1 bis 3, wobei der Körper (1) eine Aussparung (1.1.2) aufweist und die Abdeckung (2) eine Rippe (2') aufweist, so dass in der geschlossenen Position die Rippe (2') im Hinblick auf den Körper (1) in Entsprechung zur Aussparung (1.1.2) gekoppelt ist und in Kontakt steht, um eine lecksichere Befestigung zwischen der Abdeckung (2) und dem Körper (1) bereitzustellen.

5. Elektrobodentank nach einem der Ansprüche 1 bis 4, wobei die Abdeckung (2) mindestens eine Lasche (9) aufweist, wobei die Lasche (9) auf der Abdeckung (2) zum teilweisen Abdecken des Zugangs zum Hohlraum (A) mit Hilfe einer Bewegung von der Innenfläche (2.2) zur Außenfläche (2.1) entfernbar koppelbar ist.

6. Elektrobodentank nach Anspruch 5, wobei die Lasche (9) mindestens teilweise elastisch verformbar ist, so dass bei Kopplung der Lasche (9) auf der Abdeckung (2), was den Zugang zum Hohlraum (A) teilweise abdeckt, sie verformbar ist, was einen Durchgang in den Hohlraum (A) herstellt.

7. Elektrobodentank nach einem der Ansprüche 1 bis 6, wobei der mindestens eine Träger (3) einen ersten elastisch beweglichen Stift (3.1) zur eingepassten Anordnung durch Schnappverbindung in dem mindestens einen Einpassbereich (4) aufweist.

8. Elektrobodentank nach einem der Ansprüche 1 bis 7, wobei er zusätzlich eine Fixiereinrichtung zum Fixieren des mindestens einen Trägers (3) aufweist, der in dem mindestens einen Einpassbereich (4) eingepasst angeordnet ist.

9. Elektrobodentank nach Anspruch 8, wobei die Fixiereinrichtung ein Anschlagelement (10) in dem mindestens einen Träger (3) aufweist, wobei das Anschlagelement (10) beweglich ist zwischen einer freien Position, in der der mindestens eine Träger (3) im Hinblick auf den mindestens einen Einpassbereich (4) eingepasst und entnommen werden kann, und einer Blockierposition, in der der mindestens eine Träger (3) gegen Entnahme im Hinblick auf den mindestens einen Einpassbereich (4) blockiert werden kann.

10. Elektrobodentank nach Anspruch 9, wobei das Anschlagelement (10) eine Vorwölbung (10.3) zum Festlegen der freien und Blockierposition aufweist.

11. Elektrobodentank nach Anspruch 9 oder 10, wobei in der freien Position das Anschlagelement (10) an dem mindestens einen Träger (3) platziert ist und in der Blockierposition das Anschlagelement (10) von einer Grenze zum Festhalten desselben teilweise vorsteht.

12. Elektrobodentank nach einem der Ansprüche 9 bis 11, wobei das Anschlagelement (10) zwischen der freien Position und der Blockierposition drehend beweglich ist.

13. Elektrobodentank nach einem der Ansprüche 1 bis 12, wobei der mindestens eine Träger (3) einen zweiten starren Stift (3.2) zum eingepassten Anordnen in einem der Einpassbereiche (4) aufweist.

14. Elektrobodentank nach einem der Ansprüche 1 bis 13, wobei der Körper (1) Vertiefungen (12.A, 12.B) zum Stützen der Abdeckung (2) in der geschlossenen Position aufweist, wobei die Vertiefungen (12.A, 12.B) so angeordnet sind, dass sie Routen (13) für in den Hohlraum (A) fallende Fremdstoffe und Kabelgehäuse festlegen.

## Revendications

1. Boîtier électrique monté au sol, comprenant :
- un corps (1) qui comprend des parois latérales (1') définissant un espace creux (A) avec un contour fermé et une ouverture d'accès (1.1) dans l'espace creux (A) ;
- au moins un support (3) configuré pour abriter des éléments électriques et/ou de données ;
- au moins une zone d'ajustement (4) pour l'agencement ajusté de l'au moins un support (3) dans l'espace creux (A) ;
- un couvercle (2) comprenant une face extérieure (2.1) et une face intérieure (2.2) opposée à la face extérieure (2.1) et pouvant être agencé en face de l'espace creux (A), le couvercle (2) servant à fermer l'ouverture d'accès (1.1) ;
- des moyens de placement pour placer le couvercle (2) sur le corps (1), les moyens de placement étant agencés pour déplacer le couvercle (1) entre une position ouverte, donnant accès à l'espace creux (A), et une position fermée, bloquant l'accès à l'espace creux (A) ;
dans lequel les moyens de placement comprennent au moins une saillie (5) et au moins une cavité (6) pour établir une fixation mobile entre le couvercle (2) et le corps (1) ;
**caractérisé en ce que** l'au moins une saillie (5) a une première partie (5.1) et une seconde partie (5.2), dans lequel ladite première partie (5.1) qui s'étend de façon externe d'une manière progressive pour pouvoir placer et retirer l'au moins une saillie (5) par rapport à l'au moins une cavité (6) par encliquetage, et dans lequel
ladite seconde partie (5.2) s'étend de façon externe d'une manière abrupte pour une retenue fournie par un contact de la seconde partie (5.2) avec l'au moins une cavité (6), de telle sorte que la saillie (5) puisse être retirée et être libre de tourner dans l'au moins une cavité (6).

2. Boîtier électrique monté au sol selon la revendication 1, dans lequel ladite au moins une cavité (6) a une configuration allongée fournissant un mouvement coulissant et le mouvement rotatif de l'au moins une saillie (5) qui est placée dans l'au moins une cavité (6).

3. Boîtier électrique monté au sol selon la revendication 1 ou 2, dans lequel il comprend au moins une perforation (1.1.1) dans au moins une parmi les parois latérales (1'), la perforation (1.1.1) étant agencée de telle sorte qu'elle détermine un passage pour vider un liquide de façon externe par rapport à l'espace creux (A).

4. Boîtier électrique monté au sol selon l'une quelconque des revendications 1 à 3, dans lequel le corps (1) comprend un évidement (1.1.2) et le couvercle (2) comprend une ailette (2'), de telle sorte que dans la position fermée l'ailette (2') soit accouplée et en contact par rapport au corps (1) en correspondance avec l'évidement (1.1.2) pour fournir une fixation étanche entre le couvercle (2) et le corps (1).

5. Boîtier électrique monté au sol selon l'une quelconque des revendications 1 à 4, dans lequel le couvercle (2) comprend au moins une patte (9), la patte (9) pouvant être accouplée sur le couvercle (2) d'une manière amovible pour couvrir partiellement l'accès à l'espace creux (A) au moyen d'un mouvement à partir de la face intérieure (2.2) jusqu'à la face extérieure (2.1).

6. Boîtier électrique monté au sol selon la revendication 5, dans lequel la patte (9) est au moins partiellement déformable élastiquement de telle sorte que, avec la patte (9) accouplée sur le couvercle (2) couvrant partiellement l'accès à l'espace creux (A), elle soit déformable établissant un passage dans l'espace creux (A).

7. Boîtier électrique monté au sol selon l'une quelconque des revendications 1 à 6, dans lequel l'au moins un support (3) comprend une première goupille mobile élastiquement (3.1) pour l'agencement ajusté par encliquetage dans l'au moins une zone d'ajustement (4).

8. Boîtier électrique monté au sol selon l'une quelconque des revendications 1 à 7, dans lequel il comprend de plus des moyens de fixation pour fixer l'au moins un support (3) agencé d'une manière ajustée dans l'au moins une zone d'ajustement (4).

9. Boîtier électrique monté au sol selon la revendication 8, dans lequel les moyens de fixation comprennent un élément d'arrêt (10) dans l'au moins un support (3), l'élément d'arrêt (10) étant mobile entre une position libre, dans laquelle l'au moins un support (3) peut être ajusté et enlevé par rapport à l'au moins une zone d'ajustement (4), et une position de blocage, dans laquelle l'au moins un support (3) peut être bloqué afin de ne pas être enlevé par rapport à l'au moins une zone d'ajustement (4).

10. Boîtier électrique monté au sol selon la revendication 9, dans lequel l'élément d'arrêt (10) comprend une proéminence (10.3) pour déterminer la position libre et de blocage.

11. Boîtier électrique monté au sol selon la revendication 9 ou 10, où dans la position libre l'élément d'arrêt (10) est placé contre l'au moins un support (3), et dans la position de blocage l'élément d'arrêt (10) fait saillie partiellement à partir d'une bordure pour localiser celui-ci.

12. Boîtier électrique monté au sol selon l'une quelconque des revendications 9 à 11, dans lequel l'élément d'arrêt (10) est mobile de manière rotative entre la position libre et la position de blocage.

13. Boîtier électrique monté au sol selon l'une quelconque des revendications 1 à 12, dans lequel l'au moins un support (3) comprend une seconde goupille rigide (3.2) pour être agencé ajusté dans une des zones d'ajustement (4).

14. Boîtier électrique monté au sol selon l'une quelconque des revendications 1 à 13, dans lequel le corps (1) comprend des dépressions (12.A, 12.B) pour supporter le couvercle (2) dans la position fermée, les dépressions (12.A, 12.B) étant agencées de telle sorte qu'elles déterminent des chemins (13) pour des substances externes tombant dans l'espace creux (A) et un logement de câbles.
